# EUROPEAN PATENT SPECIFICATION

(11) **EP 1 761 615 B1**
(45) Date of publication and mention of the grant of the patent: **05.04.2017**
(21) Application number: 05748442.0
(22) Date of filing: 19.05.2005
(51) Int. Cl.: C10G 9/20

(54) **METHOD for CRACKING A HYDROCARBON FEEDSTOCK CONTAINING RESID AND CRACKING APPARATUS THEREFOR**
VERFAHREN ZUM CRACKEN VON RESIDUUM ENTHALTENDEM KOHLENWASSERSTOFF-EINSATZSTOFF UND VORRICHTUNG ZUM CRACKEN DAFÜR
PROCÉDÉ DE CRAQUAGE DE CHARGES D'HYDROCARBURES CONTENANT DES RÉSIDUS ET APPAREIL DE CRAQUAGE UTILISABLE À CET EFFET

(30) Priority: 21.05.2004 US 851878; 21.05.2004 US 851494; 21.05.2004 US 851487; 21.05.2004 US 851495; 21.05.2004 US 851730; 21.05.2004 US 851500; 21.05.2004 US 573474 P; 21.05.2004 US 851546; 21.05.2004 US 851434; 21.05.2004 US 851486; 14.07.2004 US 891795; 14.07.2004 US 891981; 16.07.2004 US 893716; 28.10.2004 US 975703; 10.12.2004 US 9661
(43) Date of publication of application: 14.03.2007
(73) Proprietor: ExxonMobil Chemical Patents Inc., Baytown, TX 77520-2101 (US)
(72) Inventor: STELL, Richard, C., Houston, TX 77062 (US); DI NICOLANTONIO, Arthur, R., Seabrook, TX 77586 (US); STEPHENS, George, Humble, TX 77346 (US); FRYE, James, M., Houston, TX 77044 (US)
(74) Representative: ExxonMobil Chemical Europe Inc.
(86) International application number: PCT/US2005/017544
(87) International publication number: WO 2005/113715

(56) References cited:
- US-A- 3 900 300
- US-A1- 2004 004 028
- DATABASE WPI Section Ch, Week 199001 Derwent Publications Ltd., London, GB; Class H02, AN 1990-006288 XP002319463 & SU 1 491 552 A (UFA PETROLEUM INST) 7 July 1989 (1989-07-07)

## Description

### FIELD OF THE INVENTION

The present invention relates to cracking apparatus and a process for cracking which exhibits great efficiency in removing non-volatile hydrocarbons from hydrocarbon feedstocks.

### BACKGROUND OF THE INVENTION

Steam cracking, also referred to as pyrolysis, has long been used to crack various hydrocarbon feedstocks into olefins, preferably light olefins such as ethylene, propylene, and butenes. Conventional steam cracking utilizes a pyrolysis furnace which has two main sections: a convection section and a radiant section. The hydrocarbon feedstock typically enters the convection section of the furnace as a liquid (except for light feedstocks which enter as a vapor) wherein it is typically heated and vaporized by indirect contact with hot flue gas from the radiant section and by direct contact with steam. The vaporized feedstock and steam mixture is then introduced into the radiant section where the cracking takes place. The resulting products, including olefins, leave the pyrolysis furnace for further downstream processing, including quenching.

Conventional steam cracking systems have been effective for cracking high-quality feedstocks such as gas oil and naphtha. However, steam cracking economics sometimes favor cracking low cost heavy feedstock such as, by way of non-limiting examples, crude oil and atmospheric resid, also known as atmospheric pipestill bottoms. Crude oil and atmospheric resid contain high molecular weight, non-volatile components with boiling points in excess of 590°C (1100°F). The non-volatile, heavy ends of these feedstocks lay down as coke in the convection section of conventional pyrolysis furnaces. Only very low levels of non-volatiles can be tolerated in the convection section downstream of the point where the lighter components have fully vaporized. Additionally, some naphthas are contaminated with crude oil during transport. Conventional pyrolysis furnaces do not have the flexibility to process resids, crudes, or many residue- or crude-contaminated gas oils or naphthas, which contain a large fraction of heavy non-volatile hydrocarbons.

The present inventors have recognized that in using a flash to separate heavy non-volatile hydrocarbons from the lighter volatile hydrocarbons which can be cracked in the pyrolysis furnace, it is important to maximize the non-volatile hydrocarbon removal efficiency. Otherwise, heavy, coke-forming non-volatile hydrocarbons could be entrained in the vapor phase and carried overhead into the furnace creating coking problems in the convection section.

Additionally, during transport some naphthas are contaminated with heavy crude oil containing non-volatile components. Conventional pyrolysis furnaces do not have the flexibility to process residues, crudes, or many residue- or crude-contaminated gas oils or naphthas which are contaminated with non-volatile components.

To address coking problems, U.S. Patent 3,617,493 discloses the use of an external vaporization drum for the crude oil feed and discloses the use of a first flash to remove naphtha as vapor and a second flash to remove vapors with a boiling point between 230 and 590°C (450 and 1100°F). The vapors are cracked in the pyrolysis furnace into olefins and the separated liquids from the two flash tanks are removed, stripped with steam, and used as fuel.

U.S. Patent 3,718,709 discloses a process to minimize coke deposition. It describes preheating of heavy feedstock inside or outside a pyrolysis furnace to vaporize about 50% of the heavy feedstock with superheated steam and the removal of the residual, separated liquid. The vaporized hydrocarbons, which contain mostly light volatile hydrocarbons, are subjected to cracking.

U.S. Patent 5,190,634 discloses a process for inhibiting coke formation in a furnace by preheating the feedstock in the presence of a small, critical amount of hydrogen in the convection section. The presence of hydrogen in the convection section inhibits the polymerization reaction of the hydrocarbons thereby inhibiting coke formation.

U.S. Patent 5,580,443 discloses a process wherein the feedstock is first preheated and then withdrawn from a preheater in the convection section of the pyrolysis furnace. This preheated feedstock is then mixed with a predetermined amount of steam (the dilution steam) and is then introduced into a gas-liquid separator to separate and remove a required proportion of the non-volatiles as liquid from the separator. The separated vapor from the gas-liquid separator is returned to the pyrolysis furnace for heating and cracking.

US 2004/0004022 A1 describes an advantageously controlled process to optimize the cracking of volatile hydrocarbons contained in the heavy hydrocarbon feedstocks and to reduce and avoid coking problems. It provides a method to maintain a relatively constant ratio of vapor to liquid leaving the flash by maintaining a relatively constant temperature of the stream entering the flash. More specifically, the constant temperature of the flash stream is maintained by automatically adjusting the amount of a fluid stream mixed with the heavy hydrocarbon feedstock prior to the flash. The fluid can be water.

US20050209495 describes a process for cracking heavy hydrocarbon feedstock which mixes heavy hydrocarbon feedstock with a fluid, e.g., hydrocarbon or water, to form a mixture stream which is flashed to form a vapor phase and a liquid phase, the vapor phase being subsequently cracked to provide olefins, and the product effluent cooled in a transfer line exchanger, wherein the amount of fluid mixed with the feedstock is varied in accordance with a selected operating parameter of the process, e.g., temperature of the mixture stream before the mixture stream is flashed.

US 2004/0004028 A1 describes an advantageously controlled process to increase the non-volatile removal efficiency in a flash drum in the steam cracking system wherein gas flow from the convection section is converted from mist flow to annular flows before entering the flash drum to increase the removal efficiency by subjecting the gas flow first to an expander and then to bends, forcing the flow to change direction. This coalesces fine liquid droplets from the mist.

US3,900,300 and SU1491552 disclose vapor liquid separation arrangements.

It has been found that in the convection section of a steam cracking pyrolysis furnace, a minimum gas flow is required in the piping to achieve good heat transfer and to maintain a film temperature low enough to reduce coking. Typically, a minimum gas flow velocity of about 30 m/sec (100 ft/sec) has been found to be desirable.

When using a vapor/liquid separation apparatus such as a flash drum to separate the lighter volatile hydrocarbon as vapor phase from the heavy non-volatile hydrocarbon as liquid phase, the flash stream entering the flash drum usually comprises a vapor phase with liquid (the non-volatile hydrocarbon components) entrained as fine droplets. Therefore, the flash stream is two-phase flow. At the flow velocities required to maintain the required boundary layer film temperature in the piping inside the convection section, this two-phase flow is in a "mist flow" regime. In this regime, fine droplets comprising non-volatile heavy hydrocarbons are entrained in the vapor phase, which is the volatile hydrocarbons and, optionally, steam. The two-phase mist flow presents operational problems in the flash drum because at these high gas flow velocities the fine droplets comprising non-volatile hydrocarbons do not coalesce and, therefore, cannot be efficiently removed as liquid phase from the flash drum. It was found that, at a gas flow of 30 m/sec (100 ft/sec) velocity, the flash drum can only remove heavy non-volatile hydrocarbons at a low efficiency, e.g., about 73%.

The present invention provides an apparatus and process for the effective removal of non-volatile hydrocarbon liquid from the volatile hydrocarbon vapor in the flash drum. The present invention provides an apparatus and process that significantly enhance the separation of non-volatile and volatile hydrocarbons in the flash drum.

### SUMMARY OF THE INVENTION

The present invention provides a cracking apparatus for cracking a hydrocarbon feedstock containing resid, comprising
(i) a heating zone for heating said hydrocarbon feedstock to provide heated hydrocarbon feedstock;
(ii) a mixing zone for mixing a primary dilution steam stream with said heated hydrocarbon feedstock to provide a heated two-phase stratified open channel flow mixture stream;
(iii) a vapor/liquid separation apparatus for treating the mixture stream, comprising
   (a) a substantially cylindrical vertical drum having an upper cap section, a middle section comprising a circular wall, and a lower cap section;
   (b) an overhead vapor outlet attached to said upper cap section;
   (c) at least one substantially tangentially positioned inlet in the circular wall of said middle section for introducing said flow along said wall;
   (d) an annular structure located in the middle section, comprising an annular ceiling section extending from the circular wall and an internal vertical side wall to which said ceiling section extends, said side wall being positioned substantially concentrically to, but away from, said circular wall, for blocking the upward passage of said vapor/liquid mixtures along the circular wall beyond said ceiling section, said annular structure surrounding an open core having sufficient cross-sectional area to permit vapor velocity low enough to avoid significant entrainment of liquid for permitting vapor flow to the overhead vapor outlet; and
   (e) a substantially concentrically positioned, substantially cylindrical boot of less diameter than said middle section, said boot communicating with said lower cap section and comprising a liquid outlet at its lower end,
(iv) a pyrolysis furnace comprising a convection section and a radiant section for cracking the vapor phase from the overhead vapor outlet to produce an effluent comprising olefins;
(v) a means for quenching the effluent; and
(vi) a recovery train for recovering cracked product from the quenched effluent,
characterized in that at least one baffle is located in said drum vapor/liquid separation apparatus at a lower part of said middle section providing a surface slanting downwardly from the center of said drum toward the circular wall and providing a gap between said baffle and said circular wall for directing liquid along or near the circular wall to said lower cap section and the boot has an inlet for quench oil.
The annular structure surrounds an open core having so that in operation sufficient cross-sectional area exists to permit vapor velocity low enough to avoid significant entrainment of liquid.

The mixing zone for mixing a primary dilution steam stream with the heated hydrocarbon feedstock can provide a heated two-phase stratified open channel flow mixture stream, which may be further heated, e.g., by convection prior to step (c).

In yet another aspect, the present invention relates to a process for cracking a hydrocarbon feedstock containing resid, the process comprising (a) heating the hydrocarbon feedstock; (b) mixing the heated hydrocarbon feedstock with a primary dilution steam stream to form a heated two-phase stratified open channel flow mixture stream, which may be further heated, e.g, by convection, prior to step (c); (c) directing the mixture stream to a vapor/liquid separation apparatus (or flash zone) for treating vapor/liquid mixtures of hydrocarbons and steam, the apparatus comprising (i) a substantially cylindrical vertical drum having an upper cap section, a middle section comprising a substantially circular wall, and a lower cap section; (ii) an overhead vapor outlet attached to the upper cap section; (iii) at least one substantially tangentially positioned inlet in the wall of the middle section for introducing the flow along the wall; (iv) an annular structure located in the middle section, comprising 1) an annular ceiling section extending from the circular wall and 2) an internal vertical side wall to which the ceiling section extends, the side wall being positioned substantially concentrically to, but away from, the circular wall, the annular structure blocking the upward passage of the vapor/liquid mixtures along the circular wall beyond the ceiling section, and the annular structure preferably circumscribing an open core having sufficient cross-sectional area to permit vapor velocity low enough to avoid significant entrainment of liquid; and (v) a substantially concentrically positioned, substantially cylindrical boot of less diameter than the middle section, the boot communicating with the lower cap section, and further comprising an inlet for quench oil and a liquid outlet at its lower end; (d) removing the liquid phase through the liquid outlet of the vapor/liquid separation apparatus; (e) cracking the vapor phase in a radiant section of a pyrolysis furnace to produce an effluent comprising olefins, the pyrolysis furnace comprising a radiant section and a convection section; and (f) quenching the effluent and recovering cracked product therefrom.

### BRIEF DESCRIPTION OF THE DRAWINGS

Figure 1 illustrates a schematic flow diagram of a process in accordance with the present invention employed with a pyrolysis furnace.
Figure 2 illustrates an elevational view of an embodiment of the flash/separation apparatus of the present invention comprising tangential inlets, annular, inverted-L baffle, perforated conical baffle, manway, boot with anti-swirl baffles and ring distributor.
Figure 3 provides a perspective detailed view of a boot for an embodiment of the present invention, depicting an inlet for quench oil and associated ring distributor, an inlet for fluxant, a side drain, and anti-swirl baffles.
Figure 4 provides a perspective view of a cross-section of the apparatus taken at the level of the tangential inlet nozzles showing the details of the annular, inverted-L baffle.
Figure 5 provides a perspective view of a perforated conical baffle used in an embodiment of the present invention.

### DETAILED DESCRIPTION OF THE INVENTION

The present invention relates to a highly efficient vapor/liquid separation apparatus for treating a flow of vapor/liquid mixtures of hydrocarbons and steam. The apparatus comprises a substantially cylindrical vertical drum or vessel having an upper cap section, a middle section comprising a circular wall, a lower cap section, a tangential inlet to introduce hydrocarbon/steam mixtures, an overhead vapor outlet, and a bottom outlet for liquid. The vessel also comprises an annular structure located in the middle section, comprising (i) an annular ceiling section extending from the circular wall and (ii) a concentric internal vertical side wall, to which the ceiling section extends. The annular structure blocks upward passage of vapor/liquid mixtures along the circular wall beyond the ceiling section, and surrounds an open core having sufficient cross-sectional area to permit vapor velocity low enough to avoid significant entrainment of liquid.

In one embodiment of the present invention, the vapor outlet comprises a pipe extending above and below the upper cap section of the drum, wherein a skirt extends circumferentially downwardly and outwardly from a section of the pipe extending below the upper cap section of the drum.

In another embodiment, the apparatus comprises an upper and a lower cap wherein the caps are at least one of (i) substantially hemispherical and (ii) substantially elliptical in longitudinal section.

In yet another embodiment, the tangentially positioned inlet passes through the circular wall and opens into the annular structure. The apparatus can further comprise an additional substantially tangentially positioned inlet substantially opposite from the first tangentially positioned inlet, or one or more such inlets equally spaced from one another along the vessel circumference. The tangential entry causes the liquid in the two-phase flow to contact the wall with significant force, e.g., from about 1 to 2 g's of centrifugal force. This permits hot liquid hydrocarbon to wet the wall and smoothly fall to the bottom of the vertical drum without being entrained by the gas flow in the core of the drum. Advantageously, the tangentially positioned inlet can be flush to an interior side of the circular wall, in order to reduce disruption of flow, the flush entry serving to reduce or eliminate formation of mist within the vessel. The resulting smooth, near vertical flow of the liquid to the bottom of the drum minimizes its residence time before quenching in the boot. Thus, the tangential inlet or inlets can serve to completely coalesce the liquid phase.

The apparatus of the present invention includes an open core defined by the annular structure. In one embodiment, the open core has sufficient cross-sectional area to permit vapor velocity of no greater than about one-third of the maximum vapor velocity, which avoids significant entrainment of liquid in the vapor. Typically, the open core has sufficient cross-sectional area to permit a vapor velocity of no greater than 60 cm/sec (2 ft/sec), say, from 15 to 45 cm/sec (½ to 1½ ft/sec).

In an embodiment of the present invention, the tangentially positioned inlet is oriented to provide the flow in the same direction as the Coriolis force acting on the drum. Where more than one such inlet is present, all inlets are advantageously oriented to provide the flow in the same direction as the Coriolis force acting on the drum.

In one embodiment, it has been found useful to provide an apparatus according to the invention, which further comprises a means for controlling swirling of the liquid of the vapor/liquid mixture. While swirling can be unlimited in the present invention, typically, swirling is controlled to the extent that the liquid is swirled to no greater than about one-third of a revolution around the drum. The means for controlling swirling of the liquid is typically selected from at least one of (i) limiting vapor/liquid velocity entering the drum and (ii) providing a sufficient drum diameter. The vapor/liquid velocity entering the drum can be less than 9 m/sec (30 ft/sec), preferably less than 6 m/sec (20 ft/sec), preferably ranging from 3 to 6 m/sec (10 to 20 ft/sec). Sufficient drum diameters are typically greater than about 1 meter, such as greater than about 2 meters, e.g., about 4 meters.

In another embodiment of the present invention, a wear plate is attached to the circular wall adjacent the annular structure. The wear plate protects against erosion, particularly during decoking operations with air and steam in which coke can otherwise erode the interior wall of the flash vessel.

The apparatus of the present invention comprises an annular structure which serves to prevent trace mists from creeping up the drum walls. Inasmuch as a flat horizontal ring alone permits some mist to still creep up the walls and around the ring, the ring structure comprises a vertical element secured to the inner edge of the horizontal ring, providing an inverted L-shaped cross-section. Such a structure has been shown to prevent the mist from traversing the vertical element without coalescing into the bulk liquid phase. The annular structure is advantageously supported by hangers positioned above which reduces or prevents obstruction of fluid flows by the structure's supporting members.

In another embodiment, the apparatus comprises a manway provided in the circular wall, for the purpose of providing access to the interior of the flash drum for cleaning, maintenance, and other servicing. The manway can comprise a plug contoured to the shape of the circular wall through which it passes.

As earlier noted, the apparatus of the present invention comprises at least one baffle located at a lower part of the middle section providing a surface slanting downwardly from the center of the drum toward the circular wall and providing a gap between the baffle and the circular wall for directing liquid along or near the circular wall to the lower cap section. In one embodiment, the baffle is perforated. This baffle, which can be substantially conical in shape, partially isolates the bottom of the flash drum and boot from the upper part of the flash drum, but prevents hot swirling vapors from causing liquid to swirl, and prevents the colder liquid in the boot from condensing the hotter vapor. The baffle advantageously is shaped, e.g., by having sufficient pitch where conical, to prevent pooling of liquid thereon. The baffle may also comprise perforations which improve mass transfer during decoking, e.g., by permitting passage of air and steam through the baffle. By properly selecting the number and size of the perforations, during normal operation, minimal hot vapor diffuses into the bottom of the drum. Yet, during decoking, the fraction of the steam/air mixtures flowing out the bottom of the boot can effectively contact the entire drum. Without perforations, a thick layer of coke can build on the lower part of the drum and on the baffle. Thus, the perforations are advantageously sufficient in size to prevent coke from plugging them. In one embodiment, the baffle is perforated with at least one of substantially circular perforations and substantially rectangular perforations. The baffle can be perforated with perforations ranging in size from 50 to 200 cm² (8 to 31 in²). The perforations can have dimensions selected from the group consisting of about 5 cm x 20 cm (2 in x 8 in) rectangles and about 10 to 15 cm (4 to 6 in) diameter circles. Advantageously, the baffle is perforated to an extent ranging from 1% to 20% of its surface area as compared to a corresponding unperforated baffle, say, to an extent sufficient to increase mass transfer from the apparatus of a steam/air mixture used for decoking. Although a single baffle is typically used in the lower part of the middle section of the drum, multiple baffles may be used as well.

As earlier noted, the apparatus of the present invention comprises a substantially concentrically positioned, substantially cylindrical boot of less diameter than the middle section, the boot communicating with the lower cap section, and further comprising an inlet for quench oil and a liquid outlet at its lower end. The boot is the location at which hot liquid can be quenched by recycle of externally cooled liquid. The boot is advantageously sized to provide negligible liquid residence time before and during quenching, which prevents coke formation and provides a sufficient liquid level to be controllable. The liquid level also provides NPSH or Net Positive Suction Pressure to prevent cavitation in the pumps which serve to transfer liquid bottoms from the drum. The boot may comprise additional internal components to ensure that recycle quench is thoroughly and rapidly mixed with the hot liquid without causing vortexing of the liquid. Liquid vortices make the liquid level difficult to control and can allow gas to flow with the liquid into the pumps.

In one embodiment, the present invention relates to an apparatus wherein the boot further comprises an inlet for recycle quench oil. While quench can flow directly into the boot, this may cause liquid vortexing and a wavy gas/liquid interface.

In an embodiment of the present invention, it is especially desirable to provide the boot with a ring distributor for recycle quench oil, located at about the normal operating liquid level maintained in the boot. The ring distributor for recycle quench oil can advantageously comprise downwardly directed apertures to effect rapid quenching and a level gas/liquid interface. Sufficient number and size of the holes in the ring distributor ensure good flow distribution while plugging with coke.

In one embodiment, the apparatus of the present invention comprises a boot that further comprises anti-swirl baffles. Typically, the anti-swirl baffles comprise vanes whose longitudinal edges are substantially perpendicular to an internal wall of the boot, although any effective design is sufficient for present purposes.

In an embodiment, the apparatus contains a boot that further comprises at least one grate above and proximal to the liquid outlet. Such grate(s) prevent or minimize vortexing while liquid drains from the boot.

In still another embodiment, the present invention comprises an apparatus whose boot can comprise one or more additional drains for removing liquid, e.g., a side outlet above the liquid outlet. This can further prevent liquid from vortexing.

In an embodiment, the apparatus of the invention contains a boot that further comprises a side inlet for introducing fluxant. This is of particular utility because the liquid in the boot typically exhibits high viscosity as a result of high molecular weight or being partially visbroken. To promote flow of liquid hydrocarbon, the boot can be equipped with one or more nozzles for fluxant addition. Advantageously, the fluxant nozzle or nozzles can be located below the normal liquid level in the boot. Thus, fluxant can enter below the quench point, thereby preventing the fluxant from boiling.

In applying this invention, hydrocarbon feedstock containing resid may be heated by indirect contact with flue gas in a first convection section tube bank of the pyrolysis furnace before mixing with the fluid. Preferably, the temperature of the hydrocarbon feedstock is from 150 to 260°C (300 to 500°F) before mixing with the fluid.

The mixture stream may then be heated by indirect contact with flue gas in a first convection section of the pyrolysis furnace before being flashed. Preferably, the first convection section is arranged to add the fluid, and optionally primary dilution steam, between passes of that section such that the hydrocarbon feedstock can be heated before mixing with the fluid and the mixture stream can be further heated before being flashed.

The temperature of the flue gas entering the first convection section tube bank is generally less than 815°C (1500°F), for example, less than 700°C (1300°F), such as less than 620°C (1150°F), and preferably less than 540°C (1000°F). Dilution steam may be added at any point in the process, for example, it may be added to the hydrocarbon feedstock containing resid before or after heating, to the mixture stream, and/or to the vapor phase. Any dilution steam stream may comprise sour steam or process steam.

Any dilution steam stream may be heated or superheated in a convection section tube bank located anywhere within the convection section of the furnace, preferably in the first or second tube bank.

The mixture stream may be at 315 to 540°C (600°F to 1000°F) before the flash step, and the flash pressure may be 275 to 1375 kPa (40 to 200 psia). Following the flash, 50 to 98% of the mixture stream may be in the vapor phase. An additional separator such as a centrifugal separator located downstream of the vapor outlet from the drum may be used to remove trace amounts of liquid from the vapor phase. The vapor phase may be heated to above the flash temperature before entering the radiant section of the furnace, for example, to between 425 and 705°C (800 to 1300°F). This heating may occur in a convection section tube bank, preferably the tube bank nearest the radiant section of the furnace.

Unless otherwise stated, all percentages, parts, ratios, etc., are by weight. Unless otherwise stated, a reference to a compound or component includes the compound or component by itself, as well as in combination with other compounds or components, such as mixtures of compounds.

Further, when an amount, concentration, or other value or parameter is given as a list of upper preferable values and lower preferable values, this is to be understood as specifically disclosing all ranges formed from any pair of an upper preferred value and a lower preferred value, regardless whether ranges are separately disclosed.

As used herein, flow regimes are visual or qualitative properties of fluid flow. There is no set velocity and no set drop size. Mist flow refers to a two-phase flow where tiny droplets of liquid are dispersed in the vapor phase flowing through a pipe. In clear pipe, mist flow looks like fast moving small rain droplets.

Annular flow refers to a two-phase flow where liquid flows as streams on the inside surface of a pipe and the vapor flows in the core of the pipe. The vapor flow velocity of annular flow is about 6 m/sec (20 ft/sec). In clear pipe, a layer of fast moving liquid is observed. Few droplets of liquid are observed in the core of the vapor flow. At the pipe exit, the liquid usually drips out and only a small amount of mist is observed. The change from mist to annular flow usually includes a transition period where mist and annular flow exist together.

The feedstock comprises at least two components: volatile hydrocarbons and non-volatile hydrocarbons. The mist flow, in accordance with the present invention, comprises fine droplets of non-volatile hydrocarbons entrained in volatile hydrocarbon vapor.

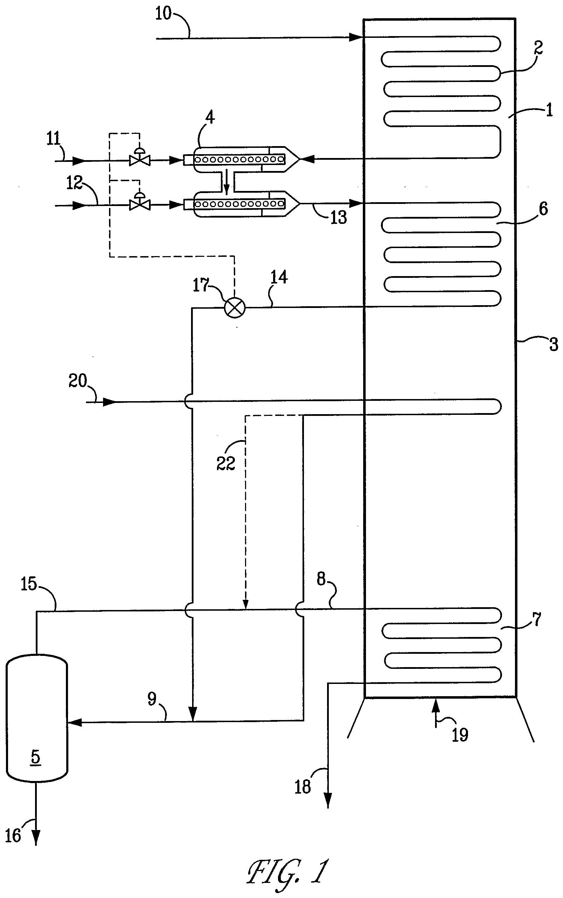

A process for cracking a hydrocarbon feedstock **10** of the present invention as illustrated in FIG. 1 comprises preheating a hydrocarbon feedstock by a bank of exchanger tubes **2,** with or without the presence of water **11** and steam **12** in the upper convection section **1** of a steam cracking furnace **3** to vaporize a portion of the feedstock and to form a mist stream **13** comprising liquid droplets comprising non-volatile hydrocarbons in volatile hydrocarbon/steam vapor. The further preheating of the feedstock/water/steam mixture can be carried out through a bank of heat exchange tubes **6.** The mist stream upon leaving the convection section **14** has a first flow velocity and a first flow direction. The process also comprises treating the mist stream to coalesce the liquid droplets, separating at least a portion of the liquid droplets from the hydrocarbon vapor in a flash **5** to form a vapor phase **15** and a liquid phase **16,** and feeding the vapor phase **8** to the lower convection section **7** and thence by crossover piping **18** to the radiant section of the cracking furnace **3.** Flue gas from the radiant section is introduced to the lower convection section **7** of furnace **3** via **19.**

As used herein, non-volatile components, or resids, are the fraction of the hydrocarbon feed with a nominal boiling point above 590°C (1100°F) as measured by ASTM D-6352-98 or D-2887. This invention works very well with non-volatiles having a nominal boiling point above 760°C (1400°F). The boiling point distribution of the hydrocarbon feed is measured by Gas Chromatograph Distillation (GCD) by ASTM D-6352-98 or D-2887 extended by extrapolation for materials boiling above 700°C (1292°F). Non-volatiles include coke precursors, which are large, condensable molecules that condense in the vapor and then form coke under the operating conditions encountered in the present process of the invention.

The hydrocarbon feedstock can comprise a large portion, such as 0.3 to 50%, of non-volatile components. Such feedstock could comprise, by way of non-limiting examples, one or more of steam cracked gas oil and residues, gas oils, heating oil, jet fuel, diesel, kerosene, gasoline, coker naphtha, steam cracked naphtha, catalytically cracked naphtha, hydrocrackate, reformate, raffinate reformate, Fischer-Tropsch liquids, Fischer-Tropsch gases, natural gasoline, distillate, virgin naphtha, atmospheric pipestill bottoms, vacuum pipestill streams including bottoms, wide boiling range naphtha to gas oil condensates, heavy non-virgin hydrocarbon streams from refineries, vacuum gas oils, heavy gas oil, naphtha contaminated with crude, atmospheric residue, heavy residue, C₄'s/residue admixture, naphtha/residue admixture, hydrocarbon gases/residue admixtures, hydrogen/residue admixtures, gas oil/residue admixtures, and crude oils.

The hydrocarbon feedstock can have a nominal end boiling point of at least 315°C (600°F), generally greater than 510°C (950°F), typically greater than 590°C (1100°F), for example greater than 760°C (1400°F). The economically preferred feedstocks are generally low sulfur waxy residues, atmospheric residues, naphthas contaminated with crude, various residue admixtures, and crude oils.

As noted, the heavy hydrocarbon feedstock is preheated in the upper convection section of the furnace **1.** The feedstock may optionally be mixed with steam before preheating or after preheating (e.g., preferably after preheater **2** in a sparger **4**). The preheating of the heavy hydrocarbon can take any form known by those of ordinary skill in the art. It is preferred that the heating comprises indirect contact of the feedstock in the convection section of the furnace with hot flue gases from the radiant section of the furnace. This can be accomplished, by way of non-limiting example, by passing the feedstock through a bank of heat exchange tubes **2** located within the upper convection section **1** of the pyrolysis furnace **3.** The preheated feedstock **14** before the control system **17** has a temperature between 310 and 510°C (600 to 950°F). Preferably, the temperature of the heated feedstock is between 370 and 490°C (700 to 920°F), more preferably between 400 and 480°C (750 to 900°F), and most preferably between 430 and 475°C (810 to 890°F).

As a result of preheating, a portion of the feedstock is vaporized and a mist stream is formed containing liquid droplets comprising non-volatile hydrocarbon in volatile hydrocarbon vapor, with or without steam. At flow velocities of greater than 30 m/sec (100 ft/sec), the liquid is present as fine droplets comprising non-volatile hydrocarbons entrained in the vapor phase. This two-phase mist flow is extremely difficult to separate into liquid and vapor. It is necessary to coalesce the fine mist into large droplets or a single continuous liquid phase before entering the flash drum. However, flow velocities of about 30 m/sec (100 ft/sec) or greater are normally necessary to practically effect the transfer of heat from the hot flue gases and reduce coking, especially in lower convection section 7 and/or further downstream.

In an embodiment of the present invention, the mist stream is treated in accordance with the method disclosed in earlier noted US2004/004028 to coalesce the liquid droplets. In one embodiment in accordance with the present invention, the treating comprises reducing the velocity of the mist stream. It is found that reducing the velocity of the mist stream leaving convection section **14** before the flash **5** (location **9** in FIG. 1) helps coalesce the mist stream. It is preferred to reduce the mist stream velocity by at least 40%, preferably at least 70%, more preferably at least 80%, and most preferably about 85%. It is also preferred to reduce the velocity of the mist flow stream leaving the convection section from at least 30 m/sec (100 ft/sec) to a velocity of less than 18 m/sec (60 ft/sec), more preferably to less than 9 m/sec (30 ft/sec), and most preferably to less than 6 m/sec (20 ft/sec).

It is found that using the invention disclosed herein, a flash drum removal efficiency of at least 95% can be accomplished. A preferred flash efficiency of at least 98%, a more preferred flash efficiency of at least about 99%, and a most preferred flash efficiency of at least 99.9% can also be achieved using the present invention. Removal or flash efficiency as used herein, is 100% less the percentage of liquid hydrocarbon entering the drum that is entrained in the overhead vapor phase leaving the flash drum.

After the desirable reduction of velocity, e.g., in a combination of expanders, the fine droplets in the mist flow stream can advantageously coalesce in one or more bends and thus are easily separated from the vapor phase stream in the flash drum **5.** Flash is normally carried out in at least one flash drum. In the flash drum **5,** the vapor phase stream is removed from at least one upper flash drum outlet **15** and the liquid phase is removed from at least one lower flash drum outlet **16.** Preferably, two or more lower flash drum outlets are present in the flash drum for liquid phase removal.

Secondary dilution steam **20** can be convection heated in the furnace **3** and then directed to the flash drum **5** via line **9.** In one embodiment, the heated secondary dilution steam can be added directly to the flash drum **5** via line **9.** Alternately, the heated secondary dilution steam can be added to the flash drum overhead by an optional bypass **22.**

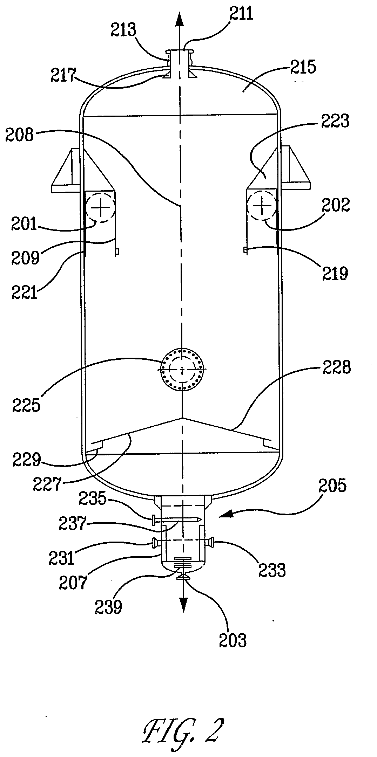

To further increase the removal efficiency of the non-volatile hydrocarbons in the flash drum (or vapor/liquid separation apparatus), it is preferred that the flash stream **9** of FIG. 1 enters the flash drum tangentially through tangential flash drum inlet **201** and **202** as shown in FIG. 2. Preferably, the tangential inlets are level or of slightly downward flow. The non-volatile hydrocarbon liquid phase will form an outer annular flow along the inside flash drum wall and the volatile vapor phase will initially form an inner core and then flow upwardly in the flash drum. In one preferred embodiment, the tangential entries should be of the same direction as the Coriolis effect.

The liquid phase is removed from bottom flash drum outlet **203** attached to boot **205.** Optionally, a side flash drum outlet **231** or a vortex breaker comprising anti-swirl baffles or vanes **207** can be added to prevent a vortex forming in the outlet. The upward inner core flow of vapor phase is diverted in the middle section **208** around an annular structure or baffle **209** inside the flash drum and is removed from at least one upper flash drum outlet or overhead vapor outlet **211** which can comprise a pipe **213** extending above and below the upper cap portion **215** of the drum which is typically semi-elliptical in longitudinal section. The baffle or annular structure **209** is installed inside the flash drum to further avoid and reduce any portion of the separated liquid phase, flowing downwards in the flash drum, from being entrained in the upflow vapor phase in the flash drum. The pipe **213** may have a skirt **217** extending circumferentially down and out from a lower section of the pipe. A stiffening ring **219** is attached to the lower internal portion of the annular structure **209** for reinforcement. A wear plate **221** is optionally provided around the internal drum wall partially enclosed by the annular structure for the purpose of preventing erosion of the internal drum wall by coke during decoking. A support structure **223** may be used to attach the annular structure **209** to the drum from above. An optional manway **225** is provided in the drum wall to provide access to the drum internals. A conical baffle **227** having sufficient pitch to prevent liquid from pooling on its surface is optionally located in the lower portion of the drum vessel, e.g., beneath the manway. Conical baffle **227** can be supported by columns or brackets **229** attached to the drum wall. A baffle manway **228** optionally provides access through the conical baffle. Boot **205** may optionally comprise a side outlet **231** that permits withdrawal of liquid bottoms while avoiding the swirling flow problems associated with using only the bottom liquid outlet **203.** The boot **205** may further comprise an inlet **233** for liquid fluxant added to control viscosity, as well as an inlet for quench oil **235** in communication with ring distributor **237.** The boot may also comprise anti-vortex subway grating **239.** The vapor phase, preferably, flows to the lower convection section **7** of FIG. 1 and through crossover pipes **18** to the radiant section of the pyrolysis furnace.

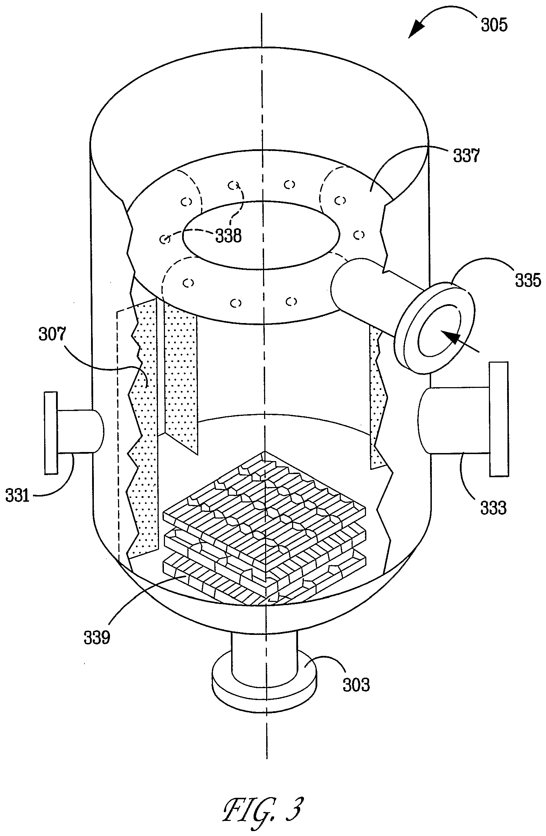

Referring to FIG. 3, a perspective detailed view of a boot **305** shows a bottom resid liquid outlet **303,** anti-swirl baffles **307,** a side drain **331,** a fluxant inlet **333,** a quench oil inlet **335** attached to ring distributor **337** having downwardly pointed holes **338,** and anti-vortex subway grating **339.**

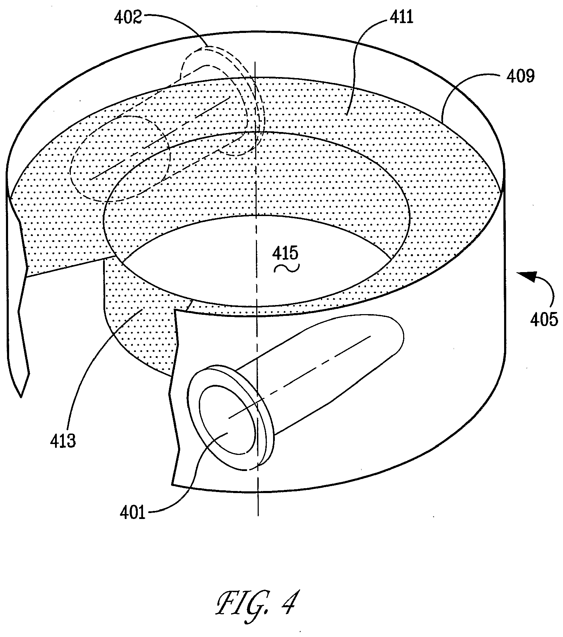

Referring to FIG. 4, a perspective detailed view, including a cut-away, of a cross-section of the vapor/liquid separation apparatus or flash drum **405** taken at the level of the tangential inlet nozzles **401** and **402** shows the details of the annular structure **409,** comprising a horizontal annular ring component or annular ceiling section **411** extending from the circular wall of the flash drum **405,** and an internal vertical side wall **413,** providing an inverted-L shaped profile as shown by the cut-away. An open core area **415** allows upward flow of the vapor phase to the overhead or vapor outlet **211** shown in FIG. 2.

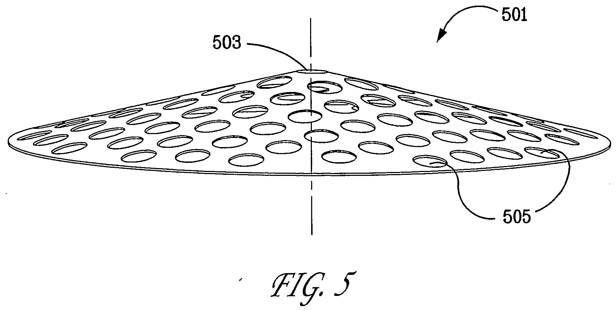

Referring to FIG. 5, a perspective view is provided of a perforated conical baffle **501** having an apex **503** used in an embodiment of the present invention, which includes perforations **505** of round or elliptical shape.

## Claims

1. Cracking apparatus for cracking a hydrocarbon feedstock (10) containing resid, comprising
(i) a heating zone (2) for heating said hydrocarbon feedstock to provide heated hydrocarbon feedstock;
(ii) a mixing zone (4) for mixing a primary dilution steam stream with said heated hydrocarbon feedstock to provide a heated two-phase stratified open channel flow mixture stream;
(iii) a vapor/liquid separation apparatus (5) for treating the mixture stream, comprising
(a) a cylindrical vertical drum having an upper cap section (215), middle section (208) comprising a circular wall, and a lower cap section;
(b) an overhead vapor outlet (211) attached to said upper cap section (215);
(c) at least one tangentially positioned inlet (201) in the circular wall of said middle section for introducing said flow along said wall;
(d) an annular structure (209) located in the middle section, comprising an annular ceiling section (411) extending from the circular wall and an internal vertical side wall (413) to which said ceiling section extends, said side wall being positioned concentrically to, but away from, said circular wall, for blocking the upward passage of said vapor/liquid mixtures along the circular wall beyond said ceiling section, said annular structure surrounding an open core (415) having sufficient cross-sectional area to permit vapor velocity low enough to avoid significant entrainment of liquid for permitting vapor flow to the overhead vapor outlet; and
(e) a concentrically positioned, cylindrical boot (205) of less diameter than said middle section, said boot communicating with said lower cap section and comprising a liquid outlet (203) at its lower end,
(iv) a pyrolysis furnace (3) comprising a convection section and a radiant section for cracking the vapor phase (15) from the overhead vapor outlet to produce an effluent comprising olefins;
(v) a means for quenching the effluent; and
(vi) a recovery train for recovering cracked product from the quenched effluent,
**characterized in that** at least one baffle (227) is located in said vapor/liquid separation apparatus (5) at a lower part of said middle section (208) providing a surface slanting downwardly from the center of said drum toward the circular wall and providing a gap between said baffle and said circular wall for directing liquid along or near the circular wall to said lower cap section and the boot (205) has an inlet for quench oil (235).

2. Apparatus of claim 1, which further comprises an additional heating zone (6) for heating effluent from said mixing zone.

3. Apparatus of claim 1 or 2, wherein said vapor outlet (211) comprises a pipe extending above and below said upper cap section of said drum, wherein a skirt (217) extends circumferentially downwardly and outwardly from a section of said pipe extending below the upper cap section of said drum.

4. Apparatus of any preceding claim, wherein said tangentially positioned inlet (201) passes through said circular wall and opens into said annular structure (209).

5. Apparatus of any preceding claim, further comprising a second tangentially positioned inlet (202) substantially opposite from a first tangentially positioned inlet (201).

6. Apparatus of claim 4 or 5, wherein said tangentially positioned inlet (201) is flush to an interior side of said circular wall.

7. Apparatus of any preceding claim, wherein said tangentially positioned inlet(s) (201, 202) is or are oriented to provide said flow in the same direction as the Coriolis force acting on said drum.

8. Apparatus of any preceding claim, wherein a wear plate (221) is attached to the circular wall adjacent said annular structure.

9. Apparatus of claim 1, wherein said baffle (227) is perforated.

10. Apparatus of claim 9, wherein said baffle (227) is perforated to an extent ranging from 1% to 20% of its surface area as compared to a corresponding un-perforated baffle.

11. Apparatus of any of claims 9 or 10, wherein said baffle (227) is conical.

12. Apparatus of any of claims 2 or 9 or 10, wherein said baffle (227) is pitched for prevent liquid from pooling thereon during operation of said apparatus.

13. Apparatus of any preceding claim, wherein said boot (205) further comprises an inlet for recycle quench oil.

14. Apparatus of claim 13, wherein said boot (205) further comprises a ring distributor for recycle quench oil for locating at the operating liquid level maintained in said boot.

15. Apparatus of claim 14, wherein said ring distributor for recycle quench oil comprises downwardly directed apertures.

16. Apparatus of any preceding claim, wherein said boot (205) further comprises anti- swirl baffles (207) in the form of vanes whose longitudinal edges are perpendicular to an internal wall of the boot.

17. Apparatus of any preceding claim, wherein said boot (205) further comprises at least one grate (239) above and proximal to said liquid outlet.

18. Apparatus of any preceding claim, wherein said boot (205) further comprises a side outlet (231) above said liquid outlet.

19. Apparatus of any preceding claim, wherein said boot (205) further comprises a side inlet (233) for introducing fluxant.

20. Process for cracking a hydrocarbon feedstock (10) containing resid in the apparatus of any of claims 1 through 19, said process comprising
(a) heating said hydrocarbon feedstock (10);
(b) mixing the heated hydrocarbon feedstock (10) with a primary dilution steam stream to form a heated two-phase stratified open channel flow mixture stream;
(c) directing said mixture stream to the vapor/liquid separation apparatus (5);
(d) removing the liquid phase through said liquid outlet (203) of the vapor/liquid separation apparatus (5);
(e) cracking the vapor phase (15) in a radiant section of a pyrolysis furnace (3) to produce an effluent comprising olefins, said pyrolysis furnace (3) comprising a radiant section and a convection section; and
(f) quenching the effluent and recovering cracked product therefrom.

21. Process of claim 20, wherein the hydrocarbon feedstock with resid comprises one or more of steam cracked gas oil and residues, gas oils, heating oil, jet fuel, diesel, kerosene, gasoline, coker naphtha, steam cracked naphtha, catalytically cracked naphtha, hydrocrackate, reformate, raffinate reformate, Fischer-Tropsch liquids, Fischer-Tropsch gases, natural gasoline, distillate, virgin naphtha, atmospheric pipestill bottoms, vacuum pipestill streams including bottoms, wide boiling range naphtha to gas oil condensates, heavy non-virgin hydrocarbon streams from refineries, vacuum gas oils, heavy gas oil, naphtha contaminated with crude, atmospheric residue, heavy residue, C4's/residue admixture, naphtha/residue admixture, hydrocarbon gases/residue admixtures, hydrogen/residue admixtures, gas oil/residue admixtures, and crude oil.

22. Process of claim 20, which further comprises heating said mixture stream prior to (c).

23. Process according to Claim 20, which further comprises a means for controlling swirling of the liquid of said vapor/liquid mixture vapor/liquid separation apparatus to no greater than about one-third of a revolution around said drum.

24. Process according to claim 23, wherein said swirling of the liquid is controlled by (i) limiting vapor/liquid velocity entering the drum and/or (ii) providing a sufficient drum diameter.

25. Process of claim 20, wherein the boot (205) has a side inlet (233) for introducing fluxant located below the normal liquid level maintained in the boot (205) during operation.

26. Process of any preceding claim 20 to 25, wherein said open core (415) has sufficient cross-sectional area to permit vapor velocity of no greater than 60 cm/sec (2 ft/sec).

## Patentansprüche

1. Crack-Vorrichtung zum Cracken von Restöl enthaltendem Kohlenwasserstoff-Einsatzmaterial (10), die
(i) eine Heizzone (2) zum Erhitzen des Kohlenwasserstoff-Einsatzmaterials, um erhitztes Kohlenwasserstoff-Einsatzmaterial bereitzustellen,
(ii) eine Mischzone (4) zum Mischen eines primären Verdünnungsdampfstroms mit dem erhitzten Kohlenwasserstoff-Einsatzmaterial, um einen erhitzten zweiphasigen, geschichteten, offen Kanalströmung-Mischstrom bereitzustellen,
(iii) eine Dampf/Flüssigkeit-Trennvorrichtung (5) zum Behandeln des Mischstroms, die
(a) eine zylindrische senkrechte Trommel mit einer oberen Kappensektion (215), einer mittleren Sektion (208), die eine umlaufende Wand umfasst, und eine untere Kappensektion,
(b) einen Überkopfdampfauslass (211), der an der oberen Kappensektion (215) angebracht ist,
(c) mindestens einen tangential positionierten Einlass (201) in der umlaufenden Wand der mittleren Sektion zum Einführen des Flusses entlang der Wand,
(d) eine ringförmige Struktur (209), die in der mittleren Sektion angeordnet ist und eine ringförmige Dachsektion (411) umfasst, die sich von der umlaufenden Wand zu einer inneren senkrechten Seitenwand (413), zu der sich die Dachsektion erstreckt, wobei die Seitenwand konzentrisch zu aber mit Abstand von der Dachsektion positioniert ist, zum Blockieren der Aufwärtsfließens der Dampf/- Flüssigkeit-Mischung entlang der umlaufenden Wand jenseits der Dachsektion, wobei die ringförmige Struktur einen offenen Kern (415) umgibt, der einen ausreichenden Querschnitt aufweist, um eine ausreichend niedrige Dampfgeschwindigkeit zu erlauben, um ein signifikantes Eintragen von Flüssigkeit zu vermeiden und dem Dampf zu ermöglichen, zu dem Überkopfdampfauslass zu strömen, und
(e) eine konzentrisch positionierte, zylindrische Ansenkung (205) mit kleinerem Durchmesser als die mittlere Sektion umfasst, wobei die Ansenkung mit der unteren Kappensektion in Verbindung steht und an ihrem unteren Ende einen Flüssigkeitsauslass (203) umfasst,
(iv) einen Pyrolyseofen (3), der eine Konvektionssektion und eine Strahlungssektion (radiant section) umfasst, zum Cracken der Dampfphase (15) aus dem Überkopfdampfauslass, um Austrittsmaterial zu erzeugen, das Olefine umfasst,
(v) Mittel zum Abschrecken des Austrittsmaterials und
(vi) einen Gewinnungszug zum Gewinnen von gecracktem Produkt aus dem abgeschreckten Austrittsmaterial umfasst,
**dadurch gekennzeichnet, dass**
mindestens eine Prallfläche (227) in der Dampf/Flüssigkeit-Trennvorrichtung (5) im unteren Teil der mittleren Sektion (208) angeordnet ist, die eine Fläche bereitstellt, die sich abwärts vom Zentrum der Trommel zur umlaufenden Wand neigt und einen Spalt zwischen der Prallfläche und der umlaufenden Wand bereitstellt, um die Flüssigkeit entlang oder nahe der umlaufenden Wand zu der unteren Kappensektion zu führen, wobei die Ansenkung (205) einen Einlass (235) für Abschrecköl aufweist.

2. Vorrichtung nach Anspruch 1, die ferner eine zusätzliche Heizzone (6) zum Erhitzen des Austrittsmaterials aus der Mischzone umfasst.

3. Vorrichtung nach Anspruch 1 oder 2, bei der der Dampfauslass (211) ein Rohr umfasst, das sich oberhalb und unterhalb der oberen Kappensektion der Trommel erstreckt, wobei eine Schürze (217) sich um dem Umfang abwärts und auswärts von einem Abschnitt des Rohrs erstreckt, der sich unter der oberen Kappensektion der Trommel erstreckt.

4. Vorrichtung nach einem der vorhergehenden Ansprüche, bei der der tangential positionierte Einlass (201) durch die umlaufende Wand führt und sich in die ringförmige Struktur (209) öffnet.

5. Vorrichtung nach einem der vorhergehenden Ansprüche, die ferner einen zweiten tangential positionierten Einlass (201) im Wesentlichen gegenüber von dem ersten tangential positionierten Einlass (201) umfasst.

6. Vorrichtung nach Anspruch 4 oder 5, bei der der tangential positionierte Einlass (201) bündig mit einer Innenseite der umlaufenden Wand ist.

7. Vorrichtung nach einem der vorhergehenden Ansprüche, bei der der tangential positionierte Einlass (201)/die tangential positionierten Einlässe (201, 202) so orientiert ist oder sind, dass der Fluss in die gleiche Richtung gerichtet ist wie die Corioliskraft, die auf die Trommel wirkt.

8. Vorrichtung nach einem der vorhergehenden Ansprüche, bei der eine Verschleißplatte (221) an der umlaufenden Wand angrenzend an die ringförmige Struktur angebracht ist.

9. Vorrichtung nach Anspruch 1, bei der die Prallfläche (227) perforiert ist.

10. Verfahren nach Anspruch 9, bei der die Prallfläche (227) in einem Ausmaß perforiert ist, das von 1 bis 20% seiner Oberfläche reicht, verglichen mit einer entsprechenden nicht-perforierten Prallfläche.

11. Vorrichtung nach einem der Ansprüche 9 oder 10, bei der die Prallfläche (227) konisch ist.

12. Vorrichtung nach einem der Ansprüche 2 oder 9 oder 10, bei der die Prallfläche (227) geneigt ist, um zu verhindern, dass sich während des Betriebs der Vorrichtung Flüssigkeit darauf sammelt.

13. Vorrichtung nach einem der vorhergehenden Ansprüche, bei der die Ansenkung (205) ferner einen Einlass für wiederverwendetes Abschrecköl umfasst.

14. Verfahren nach Anspruch 13, bei der die Ansenkung (205) ferner einen Ringverteiler für wiederverwendetes Abschrecköl umfasst, um während des Betriebs das in der Ansenkung aufrechterhaltene Flüssigkeitsniveau zu lokalisieren.

15. Vorrichtung nach Anspruch 14, bei der der Ringverteiler für wiederverwendetes Abschrecköl nach unten gerichtete Öffnungen umfasst.

16. Vorrichtung nach einem der vorhergehenden Ansprüche, bei der die Ansenkung (205) ferner Verwirbelungen verhindernde Prallflächen (207) in Form von Flügeln umfasst, deren Längskanten senkrecht zu einer inneren Wand der Ansenkung sind.

17. Vorrichtung nach einem der vorhergehenden Ansprüche, bei der die Ansenkung (205) ferner mindestens ein Rost (239) oberhalb von und nahe bei dem Flüssigkeitsauslass umfasst.

18. Vorrichtung nach einem der vorhergehenden Ansprüche, bei der die Ansenkung (205) ferner einen Seitenauslass (231) oberhalb des Flüssigkeitsauslasses umfasst.

19. Vorrichtung nach einem der vorhergehenden Ansprüche, bei der die Ansenkung (205) ferner einen Seiteneinlass (233) zur Einführung von Fließmittel umfasst.

20. Verfahren zum Cracken eines Restöl enthaltenden Kohlenwasserstoff-Einsatzmaterials (10) in der Vorrichtung gemäß einem der Ansprüche 1 bis 19, wobei das Verfahren
(a) Erhitzen der Kohlenwasserstoff-Einsatzmaterials (10),
(b) Mischen des erhitzten Kohlenwasserstoff-Einsatzmaterials (10) mit einem primären Verdünnungsdampfstrom, um einen erhitzten, zweiphasigen, geschichteten, offen Kanalströmung-Mischstrom zu bilden,
(c) Führen des Mischstroms zu der Dampf/Flüssigkeit-Trennvorrichtung (5),
(d) Entfernen der flüssigen Phase durch den Flüssigkeitsauslass (203) der Dampf/Flüssigkeit-Trennvorrichtung (5),
(e) Cracken der Dampfphase (15) in einer Strahlungssektion eines Pyrolyseofens (3), um ein Austrittsmaterial zu erzeugen, das Olefine umfasst, wobei der Pyrolyseofen (3) eine Strahlungssektion und eine Konvektionssektion umfasst, und
(f) Abschrecken des Austrittsmaterials und Gewinnen von gecracktem Produkt daraus umfasst.

21. Verfahren nach Anspruch 20, bei dem das Kohlenwasserstoff-Einsatzmaterial mit Restöl eines oder mehrere von mit Dampf gecracktem Gasöl und Rückstanden, Gasölen, Heizölen, Düsentreibstoff, Diesel, Kerosin, Benzin, Koker-Naphtha, mit Dampf gecracktem Naphtha, katalytisch gecracktem Naphtha, Hydrocrackprodukt, raffiniertem Reformat, Fischer-Tropsch-Flüssig-keiten, Fischer-Tropsch-Gasen, natürlichem Benzin, Destillat, jungfräulichem Naphtha, Rückständen von atmosphärischer Säulendestillation, Rückstanden von Vakuumsäulendestillationsströmen einschließlich Rückstanden, Kondensaten von Naphtha bis Gasöl mit weitem Siedebereich, schweren nicht-jungfräulichen Kohlenwasserstoffströmen aus Raffinerien, Vakuumgasölen, schweren Gasölen, mit Rohstoff kontaminiertem Naphtha, atmosphärischen Rückständen, schweren Rückständen C4/Rückstand-Mischung, Naphtha/-Rückstand-Mischung, Kohlenwasserstoffgase/Rückstand-Mischungen, Wasserstoff/Rückstand-Mischungen, Gasöl/Rückstand-Mischungen, und Rohöl umfasst.

22. Verfahren nach Anspruch 20, das ferner Erhitzen des Mischstroms vor (c) umfasst.

23. Verfahren nach Anspruch 20, das ferner Mittel zum Kontrollieren von Verwirbelung der Flüssigkeit der Flüssigkeit der Dampf/Flüssigkeit-Mischung der Dampf/Flüssigkeit-Trennvorrichtung auf nicht mehr als ein Drittel einer Umdrehung um die Tonne umfasst.

24. Verfahren nach Anspruch 23, bei dem die Verwirbelung der Flüssigkeit durch (i) Begrenzen der Dampf/Flüssigkeit-Geschwindigkeit beim Eintritt in die Trommel und/oder (ii) Bereitstellung von ausreichend Trommeldurchmesser kontrolliert wird.

25. Verfahren nach Anspruch 20, bei dem die Ansenkung (205) einen Seiteneinlass (233) zur Einführung von Fließmittel unterhalb des normalen Flüssigkeitsniveaus aufweist, das in der Ansenkung (205) während des Betriebs aufrechterhalten wird.

26. Verfahren nach Einem der Ansprüche 20 bis 25, bei dem der offene Kern (415) einen ausreichend großen Querschnitt aufweist, um eine Dampfgeschwindigkeit von nicht mehr als 60 cm/s (2 Fuß/s) zu erlauben.

## Revendications

1. Appareil de craquage pour craquer une charge d'hydrocarbures (10) contenant des résidus, comprenant:
(i) une zone de chauffage (2) pour chauffer ladite charge d'hydrocarbures pour obtenir une charge d'hydrocarbures chauffée;
(ii) une zone de mélange (4) pour mélanger un courant de vapeur de dilution primaire avec ladite charge d'hydrocarbure chauffée pour obtenir un courant de mélange d'écoulement en canal ouvert stratifié biphasique chauffé;
(iii) un appareil de séparation vapeur/liquide (5) pour traiter le courant de mélange, comprenant:
(a) un tambour vertical cylindrique présentant une section de couvercle supérieure (215), une section intermédiaire (208) comprenant une paroi circulaire, et une section de couvercle inférieure;
(b) une sortie de vapeur supérieure (211) qui est attachée à ladite section de couvercle supérieure (215);
(c) au moins une entrée positionnée tangentiellement (201) dans la paroi circulaire de ladite section intermédiaire pour introduire ledit écoulement le long de ladite paroi;
(d) une structure annulaire (209) située dans la section intermédiaire, comprenant une section de plafond annulaire (411) qui s'étend à partir de la paroi circulaire et une paroi latérale verticale interne (413) jusqu'à laquelle ladite section de plafond s'étend, ladite paroi latérale étant positionnée de façon concentrique à, mais à l'écart de, la paroi circulaire, afin de bloquer le passage ascendant desdits mélanges de vapeur/liquide le long de la paroi circulaire au-delà de ladite section de plafond, ladite structure annulaire entourant un noyau ouvert (415) présentant une aire de section transversale suffisante pour permettre une vitesse de vapeur suffisamment basse pour éviter un entraînement significatif de liquide afin de permettre un écoulement de vapeur vers la sortie de vapeur supérieure; et
(e) une poche cylindrique positionnée de façon concentrique (205) dont le diamètre est inférieur à celui de ladite section intermédiaire, ladite poche communiquant avec ladite section de couvercle inférieure et présentant une sortie de liquide (203) à son extrémité inférieure;
(iv) un four de pyrolyse (3) comprenant une section de convection et une section radiante pour craquer la phase vapeur (15) provenant de la sortie de vapeur supérieure afin de produire un effluent contenant des oléfines;
(v) des moyens pour tremper l'effluent; et
(vi) un train de récupération pour récupérer le produit craqué dans l'effluent trempé,
**caractérisé en ce qu'**au moins un déflecteur (227) est situé dans ledit appareil de séparation vapeur-liquide (5) à une partie inférieure de ladite section intermédiaire (208) en fournissant une surface inclinée vers le bas à partir du centre dudit tambour en direction de la paroi circulaire et en formant un espace entre ledit déflecteur et ladite paroi circulaire afin de diriger le liquide le long ou à proximité de la paroi circulaire jusqu'à ladite section de couvercle inférieure et la poche (205) présente une entrée pour l'huile de trempe (235).

2. Appareil selon la revendication 1, comprenant en outre une zone de chauffage supplémentaire (6) pour chauffer l'effluent sortant de ladite zone de mélange.

3. Appareil selon la revendication 1 ou 2, dans lequel ladite sortie de vapeur (211) comprend un tuyau qui s'étend au-dessus et en dessous de ladite section de couvercle supérieure dudit tambour, dans lequel une jupe (217) s'étend de façon circonférentielle vers le bas et vers l'extérieur à partir d'une section dudit tuyau qui s'étend en dessous de la section de couvercle supérieure dudit tambour.

4. Appareil selon l'une quelconque des revendications précédentes, dans lequel ladite entrée positionnée de façon tangentielle (201) passe à travers ladite paroi circulaire et s'ouvre dans ladite structure annulaire (209).

5. Appareil selon l'une quelconque des revendications précédentes, comprenant en outre une deuxième entrée positionnée de façon tangentielle (202) sensiblement opposée à une première entrée positionnée de façon tangentielle (201).

6. Appareil selon la revendication 4 ou 5, dans lequel ladite entrée positionnée de façon tangentielle (201) est à fleur d'un côté intérieur de ladite paroi circulaire.

7. Appareil selon l'une quelconque des revendications précédentes, dans lequel ladite (lesdites) entrée(s) positionnée(s) de façon tangentielle (201, 202) est (sont) orientée(s) de manière à produire ledit écoulement dans la même direction que la force de Coriolis qui agit sur ledit tambour.

8. Appareil selon l'une quelconque des revendications précédentes, dans lequel une plaque d'usure (221) est attachée à la paroi circulaire à proximité de ladite structure annulaire.

9. Appareil selon la revendication 1, dans lequel ledit déflecteur (227) est perforé.

10. Appareil selon la revendication 9, dans lequel ledit déflecteur (227) est perforé dans une mesure comprise entre 1 % et 20 % de son aire de surface comparativement à un déflecteur non perforé correspondant.

11. Appareil selon l'une quelconque des revendications 9 ou 10, dans lequel ledit déflecteur (227) est conique.

12. Appareil selon l'une quelconque des revendications 2 ou 9 ou 10, dans lequel ledit déflecteur (227) est strié de manière à empêcher le liquide de s'accumuler sur celui-ci pendant le fonctionnement dudit appareil.

13. Appareil selon l'une quelconque des revendications précédentes, dans lequel ladite poche (205) comprend en outre une entrée pour recycler l'huile de trempe.

14. Appareil selon la revendication 13, dans lequel ladite poche (205) comprend en outre un distributeur en anneau pour recycler l'huile de trempe à placer au niveau du liquide de fonctionnement maintenu dans ladite poche.

15. Appareil selon la revendication 14, dans lequel ledit distributeur en anneau pour recycler l'huile de trempe comporte des ouvertures dirigées vers le bas.

16. Appareil selon l'une quelconque des revendications précédentes, dans lequel ladite poche (205) comprend en outre des déflecteurs anti-tourbillons (207) sous la forme d'aubes dont les bords longitudinaux sont perpendiculaires à une paroi interne de la poche.

17. Appareil selon l'une quelconque des revendications précédentes, dans lequel ladite poche (205) comprend en outre au moins une grille (239) au-dessus et à proximité de ladite sortie de liquide.

18. Appareil selon l'une quelconque des revendications précédentes, dans lequel ladite poche (205) comprend en outre une sortie latérale (231) au-dessus de ladite sortie de liquide.

19. Appareil selon l'une quelconque des revendications précédentes, dans lequel ladite poche (205) comprend en outre une entrée latérale (233) pour introduire un fluxant.

20. Procédé pour craquer une charge d'hydrocarbures (10) contenant des résidus dans l'appareil selon l'une quelconque des revendications 1 à 19, ledit procédé comprenant les étapes suivantes:
(a) chauffer ladite charge d'hydrocarbures (10);
(b) mélanger la charge d'hydrocarbures chauffée (10) avec un courant de vapeur de dilution primaire afin de former un courant de mélange d'écoulement de canal ouvert stratifié biphasique chauffé;
(c) diriger ledit courant de mélange vers ledit appareil de séparation vapeur-liquide (5);
(d) éliminer la phase liquide à travers ladite sortie de liquide (203) de l'appareil de séparation vapeur-liquide (5);
(e) craquer la phase vapeur (15) dans une section radiante d'un four de pyrolyse (3) afin de produire un effluent contenant des oléfines, ledit four de pyrolyse (3) comprenant une section radiante et une section de convection; et
(f) tremper l'effluent et récupérer le produit craqué dans celui-ci.

21. Procédé selon la revendication 20, dans lequel la charge d'hydrocarbures contenant des résidus comprend un ou plusieurs parmi un gas-oil craqué à la vapeur et des résidus, des gas-oils, une huile de chauffage, un carburant pour réacteurs, le diesel, le kérosène, l'essence, le naphta de coke, le naphta craqué à la vapeur, le naphta craqué par catalyse, un produit d'hydrocraquage, un produit de reformage, un produit de reformage raffiné, les liquides de Fischer-Tropsch, des gaz de Fischer, l'essence naturelle, un distillat, le naphta vierge, des fonds de pipeline atmosphérique, des courants de pipeline sous vide y compris des fonds, le naphta à point d'ébullition élevé en condensats de gas-oil, des courants d'hydrocarbures lourds non vierges de raffineries, des gas-oils sous vide, le gas-oil lourd, un naphta contaminé avec du brut, des résidus atmosphériques, des résidus lourds, un mélange 4C/résidus, un mélange naphta/résidus, des mélanges gaz hydrocarbonés/résidus, des mélanges hydrogène/résidus, des mélanges gas-oil/résidus, et du pétrole brut.

22. Procédé selon la revendication 20, comprenant en outre le chauffage dudit courant de mélange avant l'étape (c).

23. Procédé selon la revendication 20, comprenant en outre des moyens pour commander le tourbillonnement du liquide dudit appareil de séparation vapeur-liquide du mélange de vapeur/liquide non supérieur à environ un tiers d'une révolution autour dudit tambour.

24. Procédé selon la revendication 23, dans lequel ledit tourbillonnement dudit liquide est commandé en (i) limitant la vitesse du mélange de vapeur/liquide qui entre dans le tambour et/ou (ii) prévoyant un diamètre de tambour suffisant.

25. Procédé selon la revendication 20, dans lequel la poche (205) présente une entrée latérale (233) pour introduire un fluxant située en dessous du niveau de liquide normal maintenu dans la poche (205) pendant le fonctionnement.

26. Procédé selon l'une quelconque des revendications 20 à 25, dans lequel ledit noyau ouvert (415) présente une aire de section transversale suffisante pour permettre une vitesse de vapeur non supérieure à 60 cm par seconde (2 pieds par seconde).
